# EUROPÄISCHE PATENTSCHRIFT

(11) **EP 1 837 156 B1**
(45) Veröffentlichungstag und Bekanntmachung des Hinweises auf die Patenterteilung: **21.06.2017**
(21) Anmeldenummer: 07005674.2
(22) Anmeldetag: 20.03.2007
(51) Int. Cl.: B29C 47/22, B29C 47/92

(54) **Extrusionsverfahren für schlauchförmige Vorformlinge**
Extrusion method for plastic preforms
Procédé d'extrusion pour préformes en plastique

(30) Priorität: 21.03.2006 DE 102006013302
(43) Veröffentlichungstag der Anmeldung: 26.09.2007
(73) Patentinhaber: Feuerherm, Harald, 53840 Troisdorf (DE)
(72) Erfinder: Feuerherm, Harald, 53840 Troisdorf (DE)
(74) Vertreter: Lorenz, Bernd Ingo Thaddeus

(56) Entgegenhaltungen:
- WO-A1-99/44805
- DE-A1- 19 904 199
- US-A- 6 024 557
- US-B1- 6 284 169
- ING (GRAD) VOLKER VOELZ: "Beeinflussung der Wanddicke bei der Hohlkörperfertigung", PLASTVERARBEITER, HUETHIG GMBH, HEIDELBERG, DE, vol. 32, no. 3, 1 January 1981 (1981-01-01), pages 326-330, XP002133045, ISSN: 0032-1338

## Beschreibung

Die Erfindung betrifft ein Verfahren zur Extrusion von schlauchförmigen Vorformlingen, die aus einem von einem Dorn und einem Düsenring begrenzten Düsenspalt eines Strangpresskopfes austreten und in einer Blasform zu Kunststofffässern aufgeweitet werden, die einen runden Querschnitt und einen durch Stauchen geformten umlaufenden Kragen aufweisen. Mit dem Verfahren können mit einem Deckel verschließbare offene Fässer, wie z. B. Standard-Deckelfässer und Vanguard FRH-Fässer hergestellt werden. Mit dem Verfahren sollen ferner Spundfässer sowie insbesondere auch L-Ring-Fässer herstellbar sein, die in ihrem Kopfbereich und/oder im Bodenbereich einen umlaufenden und im Querschnitt etwa L-förmigen Kragen aufweisen.

Ein Extrusionsblasverfahren zur Herstellung von Kunststofffässern ist aus WO 99/44805 bekannt. Aus dem ringförmigen Düsenspalt eines Strangpresskopfes treten schlauchförmige Vorformlinge, die aus einer Kunststoffschmelze bestehen, aus und werden in einer unterhalb des Strangpresskopfes angeordneten Blasform zu den Fertigerzeugnissen aufgeweitet. Während der Extrusion der Vorformlinge wird die Düsenspaltbreite durch programmgesteuerte Stellbewegungen eines Dorns oder Düsenrings verändert. Zur Steuerung der Düsenspaltbreite wird die Wanddicke des schlauchförmigen Vorformlings nach unten dünner und nach oben zum Strangpresskopf dicker eingestellt. Hierdurch kompensiert man, dass der Vorformling sich aufgrund seines Eigengewichtes bis zur Einformung in der Blasform auslängt. Am oberen und unteren Ende der Vorformlinge unterliegen die Vorformlingsabschnitte, die um 90° zur Teilungsebene der Blasformhälften versetzt sind, einer wesentlich stärkeren Reckung in der Blasform als die in der Teilungsebene liegenden Bereiche. Die Wandabschnitte der Vorformlinge, die in der Blasform einer stärkeren Reckung ausgesetzt sind, werden bei der Extrusion der Vorformlinge durch Dickstellen verstärkt und weisen eine entsprechend größere Wandstärke auf. Zur Erzeugung von Dünnstellen und Dickstellen in den Vorformlingen werden im Rahmen der bekannten Maßnahmen Düsenschieber verwendet, welche die Breite des Düsenspaltes in Umfangsrichtung partiell verändern. Die Düsenschieber haben allerdings den Nachteil, dass die Düsenspaltgeometrie nur für einen bestimmten Abschnitt der Vorformlinge ausgelegt werden kann. Nur in diesem Abschnitt können die Düsenschieber eine optimale Schmelzeverteilung in Umfangsrichtung bewirken. Hinzu kommt das Problem, dass bei Produktumstellungen, z. B. bei einer Änderung des Behältergewichtes oder der Verwendung eines anderen Kunststoffes die Düsenschieber ausgetauscht und durch Düsenschieber mit anderem Profil ersetzt werden müssen. Dies ist sehr aufwendig.

Es ist bekannt, an Stelle eines Düsenschiebers einen flexiblen deformierbaren Ring zu verwenden, um die Schmelzeverteilung der aus dem Strangpresskopf einer Blasformanlage austretenden Vorformlinge in Umfangsrichtung zu beeinflussen (Plastverarbeiter 32 (1981) Nr. 3, Seiten 326 bis 330). Die elastisch deformierbare Hülse besteht aus einem dünnwandigen Metallring, der dorn-oder düsenringseitig im Strangpresskopf angeordnet wird und den Düsenspalt umfangsseitig begrenzt. Durch zumeist zwei gegenüberliegende Kraftantriebe, die auf den Umfang der Hülse wirken, wird die Querschnittsgeometrie des Rings verändert und die Düsenspaltbreite in Umfangsrichtung beeinflusst. Bei Verwendung eines deformierbaren Rings kann die Düsenspaltgeometrie während der Vorformlingsextrusion so geregelt werden, dass der aus der Blasform ausgeformte Hohlkörper in allen Querschnittsebenen eine annähernd einheitliche und den Vorgabewerten entsprechende Wandstärke aufweist. Bei der Fertigung von Fässern, insbesondere von L-Ring-Fässern, hat sich allerdings gezeigt, dass systembedingt noch geringfügige Wanddickenunterschiede in Umfangsrichtung auftreten können, die darauf zurückzuführen sind, dass der elastisch deformierbare Ring deformationsneutrale Bereiche aufweist, wenn der Ring durch zwei gegenüberliegende Kraftantriebe in eine ovale Form überführt wird. Diese deformationsneutralen Bereiche sind unter etwa 45° zur Deformationsachse ausgerichtet. Diesbezüglich strebt die Erfindung noch eine Verbesserung an.

Aus EP 0 945 245 A1 / US 6,284,169 B1 ist ein Extrusionsblasverfahren bekannt, mit dem Hohlkörper, die einen von der Kreisform abweichenden Querschnitt aufweisen, mit einer vorgegebenen Wandstärke gefertigt werden können. Bei der Extrusion der Vorformlinge wird die Schmelzeverteilung in Umfangsrichtung durch eine im Strangpresskopf angeordnete und den Düsenspalt umfangsseitig begrenzende elastisch deformierbare Hülse verändert und zusätzlich durch Stellbewegungen eines separat gesteuerten Zusatzelementes beeinflusst. Das Zusatzelement verstärkt die Profilierung des Vorformlings in gewünschten Bereichen. Die Verstärkung der Profilierung wird ausgenutzt, um Hohlkörper mit einem von der Kreisform abweichenden Querschnitt zu fertigen. Durch das Zusatzelement erreicht man, dass die elastische Hülse nicht zu stark deformiert werden muss, was die Standzeit der elastisch deformierbaren Hülse verlängert. Das Problem, die Wanddickenverteilung am oberen Ende von blasgeformten Fässern zu vergleichmäßigen, wird durch das Verfahren nicht gelöst.

In EP 0 885 711 B1 wird ein Extrusionsblasverfahren beschrieben, bei dem die Querschnittsgeometrie einer im Strangpresskopf angeordneten und den Düsenspalt umfangsseitig begrenzenden elastisch deformierbaren Hülse während der Extrusion der Vorformlinge verändert wird. Die elastisch deformierbare Hülse und die ihr zugeordneten Kraftantriebe sind an einem Tragring angeordnet, der im Düsengehäuse radial beweglich angeordnet ist und mittels eines steuerbaren Zusatzkraftantriebes radial verstellt werden kann. Mit dem Verfahren können Vorformlinge mit unsymmetrischen Schmelzeverteilungen in Umfangsrichtung erzeugt werden, die in einer nachfolgenden Blasform zu kompliziert geformten Hohlkörpern aufgeweitet werden. Insbesondere ist das Verfahren für die Herstellung von Vorformlingen geeignet, die zu Kunststoffkraftstoffbehältern geformt werden. Zum Extrusionsblasformen von Fässern, die bezüglich ihrer Längsachse rotationssymmetrisch sind, ist die bekannte Anordnung nicht geeignet.

Vor diesem Hintergrund liegt der Erfindung die Aufgabe zugrunde, ein Extrusionsblasverfahren für Kunststofffässer anzugeben, welches sicherstellt, dass die Blasformkörper über ihre gesamte Länge einschließlich ihres kritischen Kopf- und Bodenbereiches eine vorgegebene Wandstärke aufweisen, die in Umfangsrichtung nicht von Vorgabewerten abweicht. Das Verfahren soll insbesondere zur Herstellung von Stauchbundfässern geeignet sein, die im Kopfbereich und/oder Bodenbereich einen im Querschnitt L-förmigen Kragen aufweisen.

Die Aufgabe wird erfindungsgemäß durch ein Verfahren nach Anspruch 1 gelöst.

Die Düsenspaltbreite wird während der Extrusion der Vorformlinge durch eine Stellbewegung des Dorns und/oder des Düsenrings verändert. Ferner wird die Querschnittsgeometrie einer den Düsenspalt umfangsseitig begrenzenden elastisch deformierbaren Hülse während der Extrusion der Vorformlinge verändert. Durch Stellbewegungen zumindest eines separat gesteuerten Zusatzelementes werden die umfangsseitige Schmelzeverteilung zumindest in den Abschnitten der Vorformlinge, die in der Blasform zu einem oberen Fassabschluss und einem Fassboden aufgeweitet werden, beeinflusst. Dabei werden die Deformation der Hülse und die Stellbewegungen des Zusatzelementes so aufeinander abgestimmt, dass der obere Abschluss der in der Blasform aufgeweiteten Fässer und der Übergangsbereich der Fässer zwischen Fassboden und Fassmantel in Umfangsrichtung keine Dickenabweichungen von Vorgabewerten aufweisen.

Die Erfindung setzt ein mit der Erkenntnis, dass ein elastischer Ring deformationsneutrale Bereiche aufweist, die bei einer Verformung des Ringes in eine ovale Querschnittsgeometrie nicht oder nur wenig deformiert werden. Diese Bereiche sind im Wesentlichen unter 45° zur Hauptdeformationsachse ausgerichtet. Durch die erfindungsgemäße Verwendung eines separat gesteuerten Zusatzelementes kann die umfangsseitige Schmelzeverteilung der Vorformlinge insbesondere in diesen Bereichen mit einem größeren Freiheitsgrad eingestellt werden. Die Deformation der Hülse und die Stellbewegungen des Zusatzelementes werden erfindungsgemäß so abgestimmt, dass der obere Abschluss der in der Blasform aufgeweiteten Fässer und der Übergangsbereich der Fässer zwischen Fassboden und Fassmantel in Umfangsrichtung keine Dickenabweichungen von Vorgabewerten aufweisen. Oberer Abschluss meint insbesondere den Kopfbereich eines offenen Fasses, das einen umfangseitigen Stauchbund zur Befestigung eines Deckels mittels eines Spannringes aufweist, oder den Kopfbereich eines Spundfasses oder eines L-Ring-Fasses, die ebenfalls jeweils durch Stauchen geformten Kragen aufweisen. Durch das erfindungsgemäße Verfahren ist es möglich, insbesondere den Kragen sowie den an den Kragen unterseitig und oberseitig anschließenden Übergangsbereich in Umfangsrichtung mit einer definierten und Vorgabewerten entsprechenden Wandstärke zu fertigen.

Die elastische Hülse, die im Fließkanal dornseitig oder düsenringseitig angeordnet sein kann, wird nach Maßgabe eines mit der Vorformlingsextrusion ablaufenden Steuerprogramms in eine im Wesentlichen zylindrische Form gebracht, wenn ein mittlerer Abschnitt der Vorformlinge extrudiert wird. Durch Deformation der Hülse wird eine ovale Querschnittsform der Hülse eingestellt, wenn die Anfangs- und Endabschnitte der Vorformlinge extrudiert werden, die in der Blasform zu einem Fassboden und zu einem oberen Fassabschluss aufgeweitet werden. Durch zusätzliche programmgesteuerte Stellbewegungen des Zusatzelementes wird das Schmelzeprofil der Vorformlinge in den Anfangs- und Endabschnitten korrigiert, um partielle Dickenunterschiede in Umfangsrichtung im Kopf- und Bodenbereich der blasgeformten Fässer auszugleichen.

Eine weitere vorteilhafte Ausgestaltung des erfindungsgemäßen Verfahrens sieht vor, dass die elastisch deformierbare Hülse durch zwei gegenüberliegende Kraftantriebe, deren Stellbewegungen in einer radial zur Mittelachse des Dorns ausgerichteten Deformationsachse Zug- und/oder Druckkräfte auf die Hülse ausüben, während der Vorformlingsextrusion deformiert wird und dass das Zusatzelement auf Abschnitte des Düsenspalts einwirkt, denen deformationsneutrale Bereiche der elastisch deformierbaren Hülse zugeordnet sind, die unter der Wirkung der Kraftantriebe nur wenig verformbar sind. Bei einer dornseitigen Anordnung wird die elastisch deformierbare Hülse durch einen vertikal ausgerichteten Kraftantrieb, der mit radial wirkenden Stellmitteln an die Hülse angeschlossen ist, während der Vorformlingextrusion deformiert. Auch hier wirkt das Zusatzelement auf Abschnitte des Düsenspaltes ein, denen deformationsneutrale Bereiche der elastisch deformierbaren Hülse zugeordnet sind, die unter der Wirkung des Kraftantriebes nur wenig verformbar sind.

Als Zusatzelement kann eine zweite elastisch deformierbare Hülse verwendet werden, die den Düsenspalt umfangsseitig begrenzt und während der Extrusion von Anfangs- und Endabschnitten der Vorformlinge durch Betätigung von auf die Hülse wirkenden Stellantrieben deformiert wird. Die Wirkungsrichtung der Stellantriebe ist unter einem Winkel, vorzugsweise einem Winkel von 45°, zur Deformationsachse der ersten elastisch deformierbaren Hülse ausgerichtet. Als Zusatzelement eignen sich aber auch horizontal oder vertikal verstellbare Schieber, durch deren Stellbewegung die Spaltbreite des Düsenspaltes in Umfangsrichtung partiell verändert wird.

Die deformierbare Hülse und das programmgesteuerte Zusatzelement können im Wesentlichen auf gleicher Höhe an gegenüberliegenden Abschnitten des Dorns und des Düsenrings angeordnet werden. Im Rahmen der Erfindung liegt es auch, die deformierbare Hülse und das programmgesteuerte Zusatzelement in Schmelzefließrichtung hintereinander anzuordnen. Die Hülse und das Zusatzelement können wahlweise dornseitig oder düsenringseitig angeordnet werden.

Die Stellbewegungen des Zusatzelementes werden zweckmäßig von einem Programm gesteuert, das zeitgleich zu einem Wanddicken-Programm abläuft, welches die Stellbewegungen des Dorns und/oder des Düsenrings sowie der auf die elastische Hülse wirkenden Kraftantriebe steuert. Daneben besteht die Möglichkeit, die Stellbewegungen des Zusatzelementes zeitabhängig, wegabhängig oder in Abhängigkeit der Schlauchlänge der aus dem Düsenspalt austretenden Vorformlinge zu steuern. Es versteht sich, dass alle Steuerungen auch mit Regelkreisen versehen werden können, welche die Stellwege des Zusatzelementes und der auf die deformierbare Hülse wirkenden Kraftantriebe kontrollieren und deren Einhaltung entsprechend den Vorgaben des Programms sicherstellen.

Im Folgenden wird die Erfindung anhand einer lediglich ein Ausführungsbeispiel darstellenden Zeichnung näher erläutert. Es zeigen schematisch
- **Fig. 1**: im Längsschnitt eine stark vereinfachte Darstellung einer Anlage zur Extrusion von Vorformlingen, die in einer Blasform zu Fässern aufgeweitet werden,
- **Fig. 2**: eine Programmsteuerung für die in Fig. 1 dargestellte Anlage,
- **Fig. 3**: die Schmelzeverteilung in den Vorformlingen in unterschiedlichen Schnittebenen,
- **Fig.4**: ein mit der Fig. 1 dargestellten Anlage hergestelltes Verfahrenserzeugnis,
- **Fig. 5 und 6**: konstruktive Ausgestaltungen des Düsenbereiches des in der Anlage eingesetzten Strangpresskopfes jeweils im Längsschnitt,
- **Fig.7**: eine weitere Ausgestaltung eines zur Durchführung des erfindungsgemäßen Verfahrens geeigneten Düsenbereiches des Strangpresskopfes im Längsschnitt.

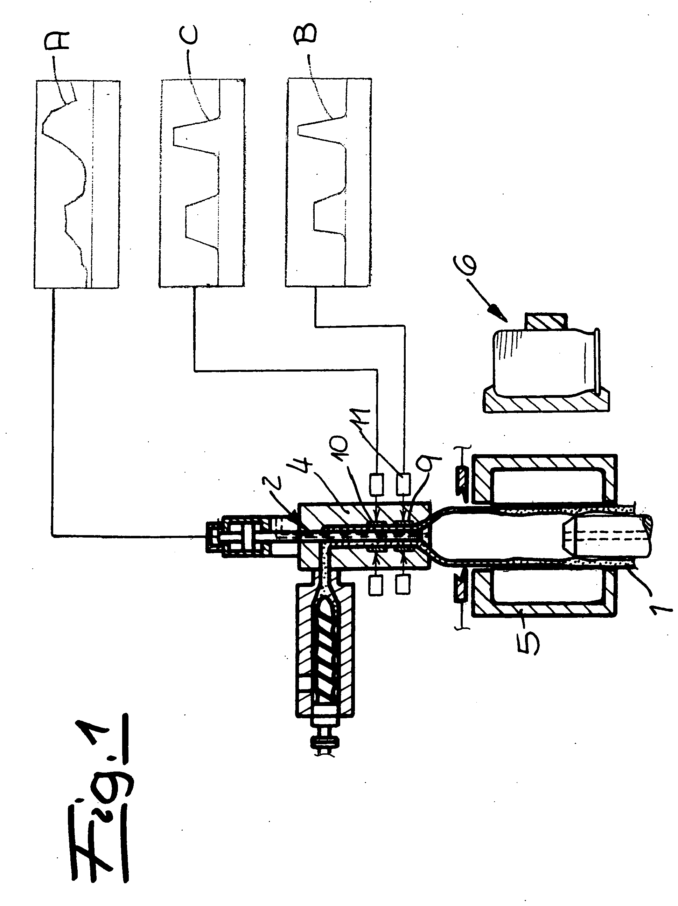

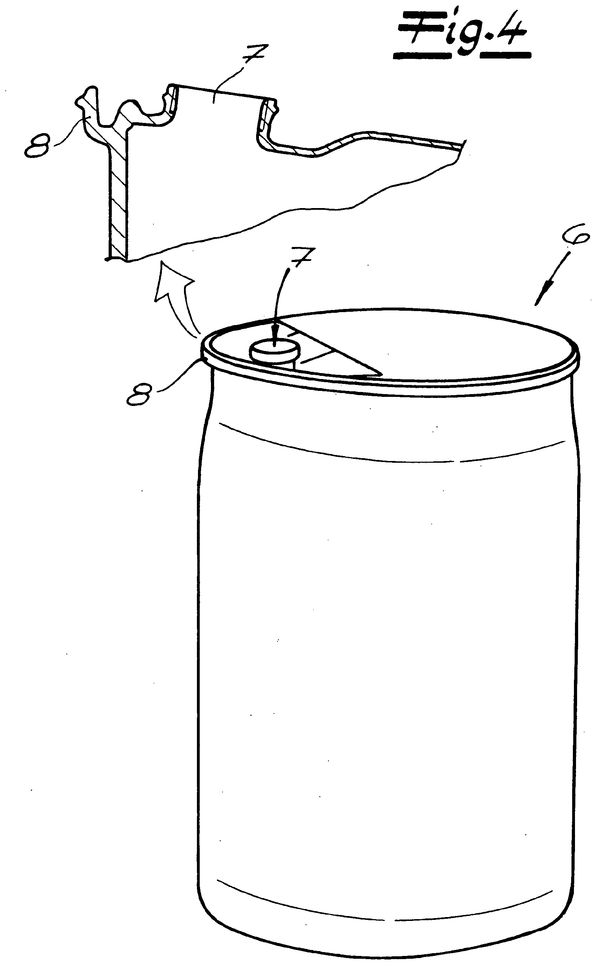

In Fig. 1 ist ein Verfahren zur Extrusion von schlauchförmigen Vorformlingen 1 dargestellt, die aus einem von einem Dorn 2 und einem Düsenring 3 begrenzten Düsenspalt eines Strangpresskopfes 4 austreten und in einer Blasform 5 zu Fässern 6 mit rundem Querschnitt aufgeweitet werden. Mit dem Verfahren können insbesondere Stauchbundfässer hergestellt werden, die an ihrem oberen Ende mit einer Spundöffnung 7 versehen sind und an ihrem äußeren Umfang einen im Querschnitt L-förmigen Kragen 8 aufweisen (Fig. 4). Solche Fässer werden auch als L-Ring-Fässer bezeichnet. Für die Gebrauchseigenschaften sind die ordnungsgemäße Ausbildung des Kragens 8 sowie des an den Kragen unter- und oberseitig anschließenden Übergangsbereiches ausschlaggebend. Der Kragen sowie der unterseitige und oberseitige Anschlussbereich bilden einen für die Gebrauchseigenschaften des Fasses kritischen Bereich. Hier sind nur geringfügige Dickenabweichungen von Vorgabewerten in Umfangsrichtung tolerabel. Abweichungen wirken sich insbesondere bei einem Falltest der Fässer nachteilig aus. Ferner ist auf eine gleichmäßige Wanddicke im Bodenbereich zu achten. Dickenabweichungen in Umfangsrichtung im Übergangsbereich der Fässer zwischen Fassboden und Fassmantel wirken sich nachteilig auf den Stauchwert bzw. die Stapelfestigkeit der Fässer aus.

Die schlauchförmigen Vorformlinge treten in thermoplastifiziertem Zustand aus dem ringförmigen Düsenspalt des Strangpresskopfes 4 aus. Die Breite des Düsenspaltes wird während der Extrusion der Vorformlinge durch eine Stellbewegung des Dorns 2 und/oder des Düsenrings 3 verändert. Ferner wird die Querschnittsgeometrie einer im Strangpresskopf angeordneten und den Düsenspalt umfangsseitig begrenzenden elastisch deformierbaren Hülse 9 während der Extrusion der Vorformlinge 1 verändert. Die Hülse 9 besteht beispielsweise aus Metall und ist dünnwandig. Sie könnte auch aus zwei oder mehr Schichten bestehen. Die Hülse kann im Fließkanal dorn- oder düsenringseitig angeordnet sein. Zusätzlich wird durch Stellbewegungen eines separat gesteuerten oder geregelten Zusatzelementes 10 die umfangsseitige Schmelzeverteilung zumindest in den Abschnitten der Vorformlinge, die in der Blasform 5 zu einem oberen Fassabschluss und zum unteren Bodenradius aufgeweitet wird, verändert. Fassabschluss meint im Ausführungsbeispiel den Kopfbereich der Fässer gegebenenfalls mit einer oder mehreren Spundöffnungen und einem ringförmigen Kragen. Die Deformation der Hülse 9 und die Stellbewegungen des Zusatzelementes 10 werden so aufeinander abgestimmt, dass der obere Abschluss der in der Blasform aufgeweiteten Fässer 6 und der Übergangsbereich der Fässer zwischen Fassboden und Fassmantel in Umfangsrichtung keine Dickenabweichungen von Vorgabewerten aufweist.

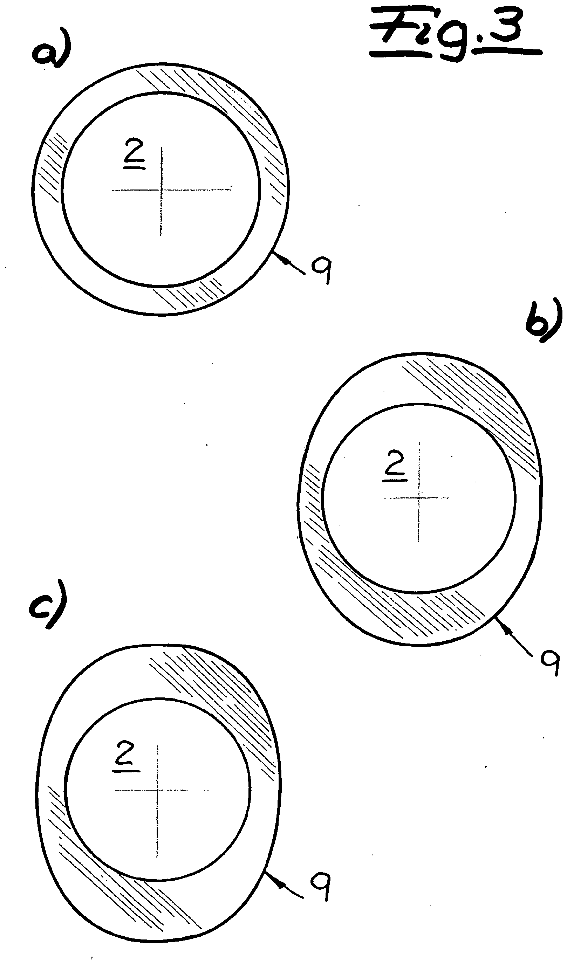

Die elastische Hülse 9 wird nach Maßgabe eines mit der Vorformlingsextrusion ablaufenden Steuerprogramms in eine im Wesentlichen zylindrische Form gebracht, wenn ein mittlerer Abschnitt der Vorformlinge extrudiert wird. Die Form wird gegebenenfalls unter Abweichung von der Zylinderform so korrigiert, dass sich eine gleichmäßige Schmelzeverteilung in Umfangsrichtung des Spaltes einstellt. Die Vorformlinge 1 weisen in diesem Bereich eine im Wesentlichen gleichmäßige Wandstärke auf. Dies zeigt der in Fig. 3a dargestellte Schnitt. Wenn die Anfangs- und Endabschnitte der Vorformlinge 1 extrudiert werden, wird die Hülse deformiert und eine im Wesentlichen ovale Querschnittsform der Hülse 9 eingestellt. Die endseitigen Vorformlingsabschnitte, die in der Blasform zu einem Fassboden oder zu dem oberen Fassabschluss aufgeweitet werden, weisen entsprechend eine Wanddickenverteilung auf, die in Fig. 3b dargestellt ist. Die dickwandigen Abschnitte der Vorformlinge sind den um 90° zur Teilungsebene der Blasformhälften versetzten Bereichen zugeordnet, die in der Blasform einer besonders starken Reckung unterliegen. Es wurde nun festgestellt, dass im Kopf- und Bodenbereich eines Kunststofffasses noch geringfügige Dickenänderungen auftreten können, wenn die Schmelzeverteilung in den Vorformlingen nur unter Verwendung einer elastisch deformierbaren Hülse 9 beeinflusst wird. Durch zusätzliche programmgesteuerte Stellbewegungen des Zusatzelementes 10 kann das Schmelzeprofil der Vorformlinge in den Anfangs- und Endabschnitten korrigiert werden. Das entsprechend korrigierte Schmelzeprofil ist in Fig. 3c dargestellt. Durch die Korrektur können partielle Dickenunterschiede in Umfangsrichtung im Kopf- und Bodenbereich der blasgeformten Fässer ausgeglichen werden. Wenn beispielsweise im Bereich zwischen der Spundöffnung 7 und dem Kragen zuviel oder zu wenig Wanddicke vorhanden ist, kann mit dem Zusatzelement 10 bei entsprechender Gestaltung die Wanddicke ebenfalls beeinflusst werden.

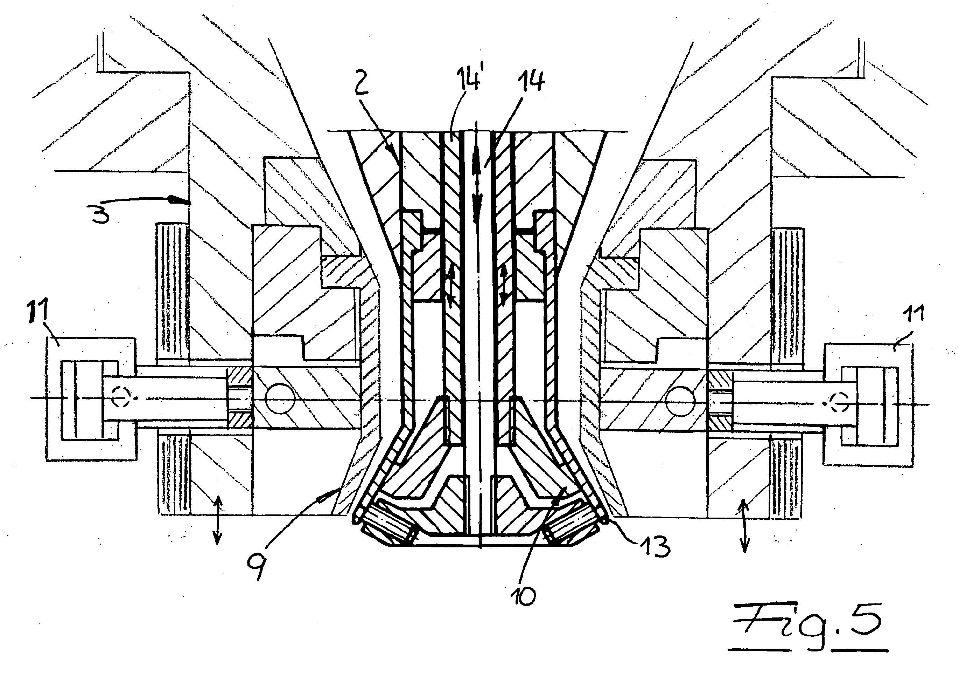

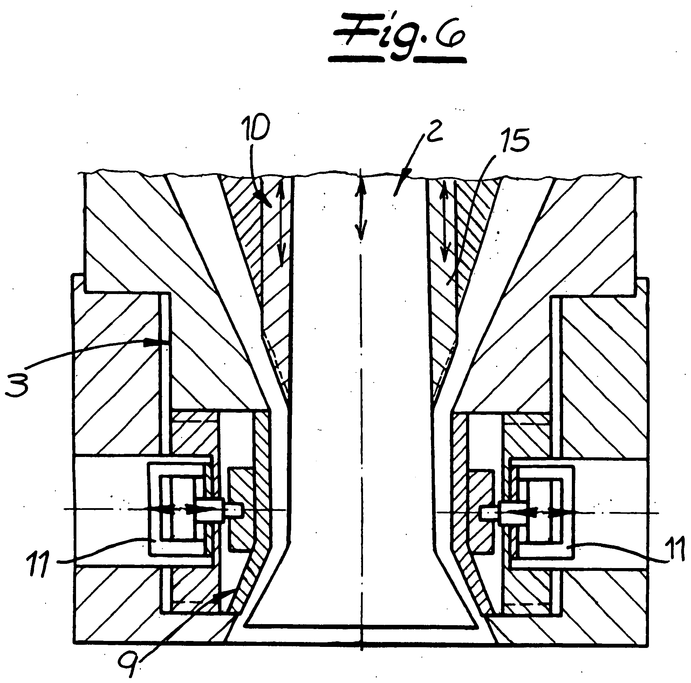

Aus den Figuren ist ersichtlich, dass die elastisch deformierbare Hülse 9 durch zwei gegenüberliegende Kraftantriebe 11, deren Stellbewegungen in einer radial zur Mittelachse des Dorns ausgerichteten Deformationsachse Zug- und/oder Druckkräfte auf die Hülse 9 ausüben, deformiert wird. Die Hülse 9 ist radial beweglich im Düsengehäuse abgestützt (Fig. 6). Das Zusatzelement 10 wirkt zumindest auf Abschnitte des Düsenspalts ein, denen deformationsneutrale Bereiche der elastisch deformierbaren Hülse zugeordnet sind. Deformationsneutrale Bereiche sind solche Bereiche, die unter der Wirkung der Kraftantriebe 11 nur wenig verformbar sind. Als Zusatzelement 10 kann eine weitere elastisch deformierbare Hülse 13 verwendet werden, die den Düsenspalt ebenfalls umfangsseitig begrenzt und während der Extrusion von Anfangs-und Endabschnitten der Vorformlinge durch Betätigung von zumindest eines auf die Hülse wirkenden Stellantriebes 14, 14' deformiert wird. Im Ausführungsbeispiel der Fig. 5 sind zwei axial verstellbare Stellantriebe 14, 14' in Form einer Stange 14 und eines Zylinders 14' vorgesehen, die auf die dornseitige Hülse 13 des Zusatzelementes wirken (Fig. 5). Die Deformationsrichtung dieser Stellantriebe 14, 14' ist gegenüber der Deformationsachse der auf die erste Hülse 9 wirkenden Kraftantriebe 11 winkelversetzt. Es versteht sich, dass als Zusatzelement 10 auch eine Gruppe von zwei oder mehr elastisch deformierbaren Hülsen einsetzbar ist.

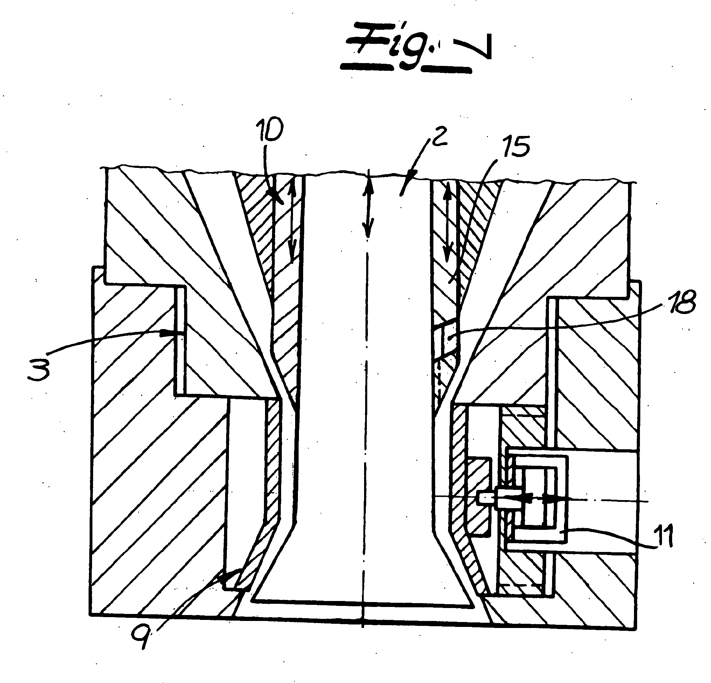

Als Zusatzelement 10 können an Stelle einer elastisch deformierbaren Hülse auch horizontal oder vertikal verstellbare Schieber 15 verwendet werden, durch deren Stellbewegung die Spaltbreite des Düsenspalts in Umfangsrichtung partiell verändert wird. Eine solche Ausführung ist schematisch in Fig. 6 dargestellt. Der Schieber 15 ist als profilierte Hülse ausgebildet und verändert in Abhängigkeit der Schiebestellung die Spaltbreite des Fließkanals. Als Zusatzelement 10 sind auch Düsenschieber sowie Schieber, die oberhalb der Düse, d. h. im Strangpresskopf, auf den Fließkanal wirken, einsetzbar. Schließlich können die Schieber auch Bypasskanäle 18 aufweisen, welche die Schmelzeverteilung am Umfang des Schiebers beeinflussen, wie dies in Fig. 7 beispielhaft dargestellt ist. Diese können in Längsrichtung ebenfalls an beliebiger Stelle des Fließkanals bis zum Düsenaustritt innen und/oder außen am Fließkanal angeordnet sein.

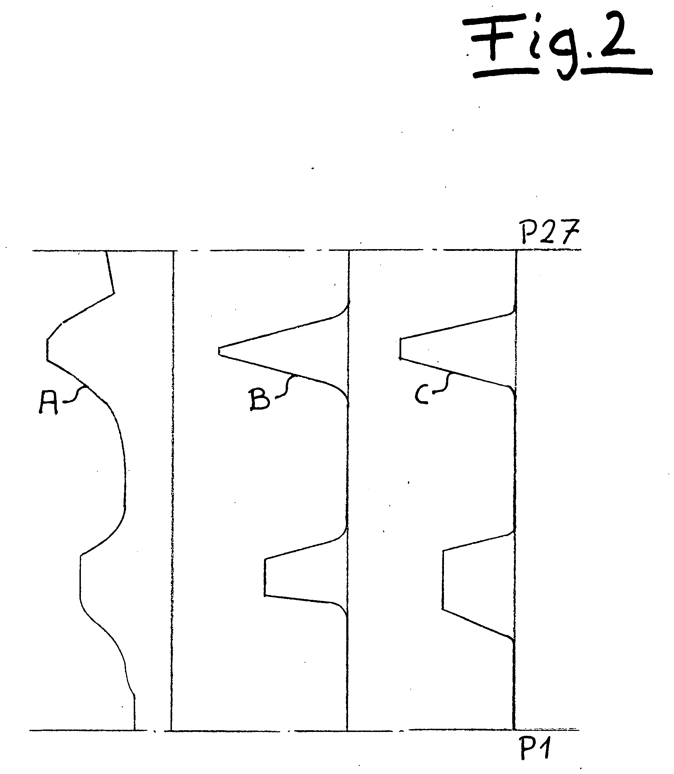

Die Fig. 2 zeigt die Programmsteuerung für die Stellbewegung A des Dorns 2 und/oder des Düsenrings 3, die Stellbewegungen B der auf die deformierbare Hülse 9 wirkenden Kraftantriebe 11 sowie die Stellbewegung C des Zusatzelementes 10 während der Extrusion eines schlauchförmigen Vorformlings. Der Vorformling soll sowohl in Längsrichtung als auch in Umfangsrichtung eine solche Schmelzeverteilung aufweisen, dass das aus dem Vorformling blasgeformte Fass eine gleichmäßige oder den Vorgaben entsprechend Wanddicke in Längs- und Umfangsrichtung aufweist und die Wanddicke insbesondere auch im kritischen Bereich am Kopfende Vorgabewerten entspricht. Die Stellbewegungen A, B des Dorns 2 sowie der auf die elastische Hülse 9 wirkenden Kraftantriebe 11 werden von einem Wanddickenprogramm gesteuert. Zeitgleich zu dem Wanddickenprogramm läuft ein Programm ab, welches die Stellbewegungen C des Zusatzelementes 10 steuert. Im Ausführungsbeispiel der Fig. 2 treten die Maximalwerte der Programmkurven B, C im Wesentlichen zeitgleich auf. Dies setzt voraus, dass die Kraftantriebe 11 und das Zusatzelement 10 annähernd auf gleicher Höhe angeordnet sind. Es versteht sich, dass die Maximalwerte der Programmkurven B, C je nach Anordnung des Zusatzelementes 10 auch zueinander zeitversetzt sein können, also die von der Programmkurve C gesteuerten Stellbewegungen im Vergleich zu der Darstellung in Fig. 2 früher oder später aktiviert werden können. Den Steuerungen können Regelkreise zugeordnet werden, die sicherstellen, dass die Stellbewegungen um das durch den Steuerimpuls vorgegebene Maß ausgeführt werden. aufgeweitet werden, weisen entsprechend eine Wanddickenverteilung auf, die in Fig. 3b dargestellt ist. Die dickwandigen Abschnitte der Vorformlinge sind den um 90° zur Teilungsebene der Blasformhälften versetzten Bereichen zugeordnet, die in der Blasform einer besonders starken Reckung unterliegen. Es wurde nun festgestellt, dass im Kopf- und Bodenbereich eines Kunststofffasses noch geringfügige Dickenänderungen auftreten können, wenn die Schmelzeverteilung in den Vorformlingen nur unter Verwendung einer elastisch deformierbaren Hülse 9 beeinflusst wird. Durch zusätzliche programmgesteuerte Stellbewegungen des Zusatzelementes 10 kann das Schmelzeprofil der Vorformlinge in den Anfangs- und Endabschnitten korrigiert werden. Das entsprechend korrigierte Schmelzeprofil ist in Fig. 3c dargestellt. Durch die Korrektur können partielle Dickenunterschiede in Umfangsrichtung im Kopf- und Bodenbereich der blasgeformten Fässer ausgeglichen werden. Wenn beispielsweise im Bereich zwischen der Spundöffnung 7 und dem Kragen zuviel oder zu wenig Wanddicke vorhanden ist, kann mit dem Zusatzelement 10 bei entsprechender Gestaltung die Wanddicke ebenfalls beeinflusst werden.

Aus den Figuren ist ersichtlich, dass die elastisch deformierbare Hülse 9 durch zwei gegenüberliegende Kraftantriebe 11, deren Stellbewegungen in einer radial zur Mittelachse des Dorns ausgerichteten Deformationsachse Zug- und/oder Druckkräfte auf die Hülse 9 ausüben, deformiert wird. Die Hülse 9 ist radial beweglich im Düsengehäuse abgestützt (Fig. 6). Das Zusatzelement 10 wirkt zumindest auf Abschnitte des Düsenspalts ein, denen deformationsneutrale Bereiche der elastisch deformierbaren Hülse zugeordnet sind. Deformationsneutrale Bereiche sind solche Bereiche, die unter der Wirkung der Kraftantriebe 11 nur wenig verformbar sind. Als Zusatzelement 10 kann eine weitere elastisch deformierbare Hülse 13 verwendet werden, die den Düsenspalt ebenfalls umfangsseitig begrenzt und während der Extrusion von Anfangs-und Endabschnitten der Vorformlinge durch Betätigung von zumindest eines auf die Hülse wirkenden Stellantriebes 14, 14' deformiert wird. Im Ausführungsbeispiel der Fig. 5 sind zwei axial verstellbare Stellantriebe 14, 14' in Form einer Stange 14 und eines Zylinders 14' vorgesehen, die auf die dornseitige Hülse 13 des Zusatzelementes wirken (Fig. 5). Die Deformationsrichtung dieser Stellantriebe 14, 14' ist gegenüber der Deformationsachse der auf die erste Hülse 9 wirkenden Kraftantriebe 11 winkelversetzt. Es versteht sich, dass als Zusatzelement 10 auch eine Gruppe von zwei oder mehr elastisch deformierbaren Hülsen einsetzbar ist.

Als Zusatzelement 10 können an Stelle einer elastisch deformierbaren Hülse auch horizontal oder vertikal verstellbare Schieber 15 verwendet werden, durch deren Stellbewegung die Spaltbreite des Düsenspalts in Umfangsrichtung partiell verändert wird. Eine solche Ausführung ist schematisch in Fig. 6 dargestellt. Der Schieber 15 ist als profilierte Hülse ausgebildet und verändert in Abhängigkeit der Schiebestellung die Spaltbreite des Fließkanals. Als Zusatzelement 10 sind auch Düsenschieber sowie Schieber, die oberhalb der Düse, d. h. im Strangpresskopf, auf den Fließkanal wirken, einsetzbar. Schließlich können die Schieber auch Bypasskanäle 18 aufweisen, welche die Schmelzeverteilung am Umfang des Schiebers beeinflussen, wie dies in Fig. 8 beispielhaft dargestellt ist. Diese können in Längsrichtung ebenfalls an beliebiger Stelle des Fließkanals bis zum Düsenaustritt innen und/oder außen am Fließkanal angeordnet sein.

Die Fig. 2 zeigt die Programmsteuerung für die Stellbewegung A des Dorns 2 und/oder des Düsenrings 3, die Stellbewegungen B der auf die deformierbare Hülse 9 wirkenden Kraftantriebe 11 sowie die Stellbewegung C des Zusatzelementes 10 während der Extrusion eines schlauchförmigen Vorformlings. Der Vorformling soll sowohl in Längsrichtung als auch in Umfangsrichtung eine solche Schmelzeverteilung aufweisen, dass das aus dem Vorformling blasgeformte Fass eine gleichmäßige oder den Vorgaben entsprechend Wanddicke in Längs- und Umfangsrichtung aufweist und die Wanddicke insbesondere auch im kritischen Bereich am Kopfende Vorgabewerten entspricht. Die Stellbewegungen A, B des Dorns 2 sowie der auf die elastische Hülse 9 wirkenden Kraftantriebe 11 werden von einem Wanddickenprogramm gesteuert. Zeitgleich zu dem Wanddickenprogramm läuft ein Programm ab, welches die Stellbewegungen C des Zusatzelementes 10 steuert. Im Ausführungsbeispiel der Fig. 2 treten die Maximalwerte der Programmkurven B, C im Wesentlichen zeitgleich auf. Dies setzt voraus, dass die Kraftantriebe 11 und das Zusatzelement 10 annähernd auf gleicher Höhe angeordnet sind. Es versteht sich, dass die Maximalwerte der Programmkurven B, C je nach Anordnung des Zusatzelementes 10 auch zueinander zeitversetzt sein können, also die von der Programmkurve C gesteuerten Stellbewegungen im Vergleich zu der Darstellung in Fig. 2 früher oder später aktiviert werden können. Den Steuerungen können Regelkreise zugeordnet werden, die sicherstellen, dass die Stellbewegungen um das durch den Steuerimpuls vorgegebene Maß ausgeführt werden.

Im Ausführungsbeispiel der Fig. 7 wird die Querschnittsgeometrie einer den Düsenspalt umfangsseitig begrenzenden elastisch deformierbaren Hülse 9 durch gesteuerte Stellbewegungen von diametral angeordneten ersten Stelleinrichtungen 16 während der Extrusion der Vorformlinge verändert. Als erste Stelleinrichtungen 16 werden Kraftantriebe 11 verwendet, die zug- und druckfest mit der Hülse 9 verbunden sind. Durch Stellbewegungen einer Gruppe von separat angesteuerten zweiten Stelleinrichtungen 17, die zu den ersten Stelleinrichtungen 16 radial versetzt angeordnet sind und ebenfalls auf die elastische Hülse 9 wirken, wird die Querschnittsgeometrie der Hülse 9 verändert, um die Schmelzeverteilung in endseitigen Abschnitten der Vorformlinge, die in der Blasform zu einem oberen Fassabschluss und zu einem Boden aufgeweitet werden, zu korrigieren. Die Stellbewegung der zugeschalteten zweiten Stelleinrichtungen 17 wird auf die Stellbewegung der Kraftantriebe 16 so abgestimmt, dass der obere Abschluss der in der Blasform aufgeweiteten Fässer und der Übergangsbereich der Fässer zwischen Fassboden und Fasswand in Umfangsrichtung keine Dickenabweichungen von Vorgabewerten aufweisen. Als zweite Stelleinrichtungen 17 werden Stößel verwendet, die mit radialen Stellbewegungen gegen die elastische Hülse 9 bewegt werden. Der Darstellung in Fig. 7 entnimmt man, dass die Kraftantriebe bzw. die Gruppe der ersten Stelleinrichtungen 16 einerseits und die Gruppe der zweiten Stelleinrichtungen 17 so ausgerichtet werden, dass die Kraftwirkungsrichtung der ersten Stelleinrichtung und die Kraftwirkungsrichtung der zweiten Stelleinrichtung rechtwinklig zueinander ausgerichtet sind. Die in Fig. 2 dargestellten Programmsteuerung ist in ähnlicher Form auch zum Betreiben des in Fig. 7 dargestellten Strangpresskopfes geeignet mit der Maßgabe, dass die Stellbewegungen der separat angesteuerten zweiten Stelleinrichtungen 17 entsprechend der Programmkurve C gesteuert werden, während die Stellbewegungen der ersten Stelleinrichtungen 16 der Programmkurve B folgen.

## Patentansprüche

1. Verfahren zur Extrusion von schlauchförmigen Vorformlingen (1), die aus einem von einem Dorn (2) und einem Düsenring (3) begrenzten Düsenspalt eines Strangpresskopfes (4) austreten und in einer Blasform (5) zu Kunststofffässern (6) aufgeweitet werden, die einen runden Querschnitt und einen durch Stauchen geformten umlaufenden Kragen (8) aufweisen,
- wobei die Düsenspaltbreite während der Extrusion der Vorformlinge (1) durch eine Stellbewegung des Dorns (2) und/oder des Düsenrings (4) verändert wird,
- wobei die Querschnittsgeometrie einer im Düsenring (3) oder am Dorn (2) angeordneten und den Düsenspalt umfangsseitig begrenzenden elastisch deformierbaren Hülse (9) entweder durch zwei gegenüberliegende Kraftantriebe (11), deren Stellbewegungen in einer radial zur Mittelachse des Dorns (2) ausgerichteten Deformationsachse Zugkräfte und/oder Druckkräfte auf die im Düsenring (3) angeordneten Hülse (9) ausüben, oder bei einer dornseitigen Anordnung der Hülse (9) durch einen vertikal ausgerichteten Kraftantrieb, der mit radial wirkenden Stellelementen an die am Dorn (2) angeordnete Hülse (9) angeschlossen ist, während der Extrusion der Vorformlinge verändert wird,
- wobei durch Stellbewegungen zumindest eines separat gesteuerten Zusatzelementes (10) die umfangsseitige Schmelzeverteilung in den Abschnitten der Vorformlinge (1), die in der Blasform (5) zu einem oberen Fassabschluss und einem Fassboden aufgeweitet werden, beeinflusst wird,
- wobei das Zusatzelement (10) auf Abschnitte des Düsenspaltes einwirkt, denen deformationsneutrale Bereiche der elastisch deformierbaren Hülse (9) zugeordnet sind, die im Wesentlichen unter 45° zur Hauptdeformationsachse ausgerichtet sind und bei einer Verformung der Hülse (9) unter der Wirkung der Kraftantriebe in eine ovale Querschnittsgeometrie nicht oder nur wenig deformiert werden,
- wobei die elastische Hülse (9) nach Maßgabe eines mit der Vorformlingsextrusion ablaufenden Steuerprogramms in eine im Wesentlichen zylindrische Form gebracht wird, wenn ein mittlerer Abschnitt der Vorformlinge (1) extrudiert wird, und wobei durch Deformation der Hülse (9) eine ovale Querschnittsform der Hülse eingestellt wird, wenn die Anfangs- und Endabschnitte der Vorformlinge (1) extrudiert werden, die in der Blasform (5) zu dem Fassboden und zu dem oberen Fassabschluss aufgeweitet werden,
- wobei durch zusätzliche programmgesteuerte Stellbewegungen des Zusatzelementes (10) das Schmelzeprofil der Vorformlinge (1) in den Anfangs- und Endabschnitten korrigiert wird, um partielle Dickenunterschiede in Umfangsrichtung im Kopf- und Bodenbereich der blasgeformten Fässer (6) auszugleichen, so dass der obere Abschluss der in der Blasform (5) aufgeweiteten Fässer (6) und der Übergangsbereich der Fässer (6) zwischen Fassboden und Fassmantel in Umfangsrichtung keine Dickenabweichungen von Vorgabewerten aufweisen.

2. Verfahren nach Anspruch 1, **dadurch gekennzeichnet, dass** als Zusatzelement (10) eine zweite elastisch deformierte Hülse (13) verwendet wird, die den Düsenspalt umfangsseitig begrenzt und während der Extrusion von Anfangs- und Endabschnitten der Vorformlinge (1) durch Betätigung von zumindest einem auf die Hülse wirkenden Stellantrieb deformiert wird.

3. Verfahren nach Anspruch 1, **dadurch gekennzeichnet, dass** als Zusatzelement (10) horizontal oder vertikal verstellbare Schieber (15) verwendet werden, durch deren Stellbewegungen die Spaltbreite des Düsenspaltes in Umfangsrichtung partiell verändert wird.

4. Verfahren nach einem der Ansprüche 1 bis 3, **dadurch gekennzeichnet, dass** die deformierbare Hülse (9) und das programmgesteuerte Zusatzelement (10) im Wesentlichen auf gleicher Höhe an gegenüberliegenden Abschnitten des Dorns (2) und des Düsenrings (3) angeordnet werden.

5. Verfahren nach einem der Ansprüche 1 bis 4, **dadurch gekennzeichnet, dass** die deformierbare Hülse (9) und das programmgesteuerte Zusatzelement (10) in Schmelzeflussrichtung hintereinander angeordnet werden.

6. Verfahren nach einem der Ansprüche 1 bis 5, **dadurch gekennzeichnet, dass** die Stellbewegungen des Zusatzelementes (10) von einem Programm gesteuert werden, das zeitgleich zu einem Wanddickenprogramm abläuft, welches die Stellbewegungen des Dorns (2) und/oder Düsenrings (3) sowie der auf die elastische Hülse (9) wirkenden Kraftantriebe (11) steuert.

7. Verfahren nach einem der Ansprüche 1 bis 5, **dadurch gekennzeichnet, dass** die Stellbewegungen des Zusatzelementes (10) von einem Programm zeitabhängig, wegabhängig oder in Abhängigkeit der Schlauchlänge der aus dem Düsenspalt austretenden Vorformlinge (1) gesteuert werden.

## Claims

1. A method for the extrusion of hose-shaped preforms (1) which issue from a nozzle gap of an extrusion head (4) delimited by a mandrel (2) and a nozzle ring (3) and are expanded in a blow mould (5) into plastic barrels (6), which comprise a round cross section and a circumferential collar (8) formed by upsetting,
- wherein the nozzle gap width during the extrusion of the preforms (1) is changed through an actuating movement of the mandrel (2) and/or of the nozzle ring (4),
- wherein the cross-sectional geometry of an elastically deformable sleeve (9) arranged in the nozzle ring (3) or on the mandrel (2) and which delimits the nozzle gap on the circumference side is changed during the extrusion of the preforms either by two power drives (11) located opposite, the actuating movements of which exert pulling forces and/or pressure forces on the sleeve (9) arranged in the nozzle ring (3) in a deformation axis orientated radially to the centre axis of the mandrel (2), or with a mandrelside arrangement of the sleeve (9) by a vertically orientated power drive which is connected with radially acting actuating elements to the sleeve (9) arranged on the mandrel (2),
- wherein through actuating movements of at least one separately controlled additional element (10) the circumference-side melt distribution in the sections of the preforms (1), which in the blow mould (5) are expanded into an upper barrel termination and a barrel bottom, is influenced,
- wherein the additional element (10) acts on sections of the nozzle gap, which are assigned deformation-neutral regions of the elastically deformable sleeve (9), which are arranged substantially at 45° to the main deformation axis and during a deformation of the sleeve (9) under the effect of the power drives into an oval cross-sectional geometry are not deformed or only a little,
- wherein the elastic sleeve (9) in accordance with a control program being executed with the preform extrusion is brought into a substantially cylindrical form when a middle section of the preforms (1) is extruded, and wherein through deformation of the sleeve (9) an oval cross-sectional shape of the sleeve is adjusted when the starting and end sections of the preforms (1) are extruded, which in the blow mould (5) are expanded into the barrel bottom and into the upper barrel termination,
- wherein through additional program-controlled actuating movements of the additional element (10) the melt profile of the preforms (1) in the starting and end sections is corrected in order to offset partial thickness differences in circumferential direction in the head and bottom region of the blow-moulded barrels (6), so that the upper termination of the barrels (6) expanded in the blow mould (5) and the transition region of the barrels (6) between barrel bottom and barrel shell do not have any thickness deviations from preset values in circumferential direction.

2. The method according to claim 1, **characterized in that** as additional element (10) a second elastically deformed sleeve (13) is used, which delimits the nozzle gap on the circumference side and during the extrusion and in sections of the preforms (1) is deformed by actuation of at least one actuating drive acting on the sleeve.

3. The method according to claim 1, **characterized in that** as additional element (10) horizontally or vertically adjustable slides (15) are used, through the actuating movements of which the gap width of the nozzle gap in circumferential direction is partially changed.

4. The method according to any one of the claims 1 to 3, **characterized in that** the deformable sleeve (9) and the program-controlled additional element (10) are substantially arranged at the same height on opposite sections of the mandrel (2) and of the nozzle ring (3).

5. The method according to any one of the claims 1 to 4, **characterized in that** the deformable sleeve (9) and the program-controlled additional element (10) are arranged one behind the other in melt flow direction.

6. The method according to any one of the claims 1 to 5, **characterized in that** the actuating movements of the additional element (10) are controlled by a program which is executed at the same time with a wall thickness program, which controls the actuating movements of the mandrel (2) and/or of the nozzle ring (3) and of the power drives (11) acting on the elastic sleeve (9).

7. The method according to any one of the claims 1 to 5, **characterized in that** the actuating movements of the additional element (10) are controlled by a program time-dependently, distance-dependently or as a function of the hose length of the preforms (1) issuing from the nozzle gap.

## Revendications

1. Procédé d'extrusion d'ébauches (1) de forme tubulaire, qui sortent par un écartement de filière d'une tête de filière (4) délimité par une épine (2) et une bague de filière (3) et qui sont élargies dans un moule de soufflage (5) en des fûts (6) en matière plastique, qui présentent une section transversale ronde et un collet (8) périphérique façonné par refoulement,
- lors duquel, pendant l'extrusion des ébauches (1), on modifie la largeur de l'écartement de filière par un déplacement de réglage de l'épine (2) et/ou de la bague de filière (4),
- pendant l'extrusion des ébauches, la géométrie de la section transversale d'une douille (9) élastiquement déformable placée dans la bague de filière (3) ou sur l'épine (2) et délimitant l'écartement de filière sur sa périphérie étant modifiée soit par deux servomoteurs (11) opposés, dont les déplacements de réglage exercent dans un axe de déformation orienté en direction radiale par rapport à l'axe médian de l'épine (2) des forces de traction et/ou des forces de pression sur la douille (9) placée dans la bague de filière (3) ou si la douille (9) est placée du côté de l'épine, par un servomoteur orienté à la verticale, qui par des éléments de réglage à action verticale est raccordé sur le douille (9) placée sur l'épine (2),
- par des déplacements de réglage d'au moins un élément additionnel (10) commandé séparément, la distribution périphérique de la masse fondue dans les segments des ébauches (1) qui dans le moule de soufflage (5) sont élargis en une terminaison supérieure de fût et en un fond inférieur de fût étant influencée,
- l'élément additionnel (10) agissant sur des segments de l'écartement de filière dont les zones à déformation neutre sont associées à la douille (9) élastiquement déformable qui sont orientés sensiblement à moins de 45° par rapport à l'axe de déformation principale et lors d'une déformation de la douille (9) sous l'effet des servomoteurs en une géométrie ovale de la section transversale ne sont pas ou seulement peu déformés,
- selon les critères d'un programme de commande s'exécutant avec l'extrusion des ébauches, la douille (9) élastique étant amenée dans une forme sensiblement cylindrique lorsqu'un segment médian des ébauches (1) est extrudé et par déformation de la douille (9), une forme de section transversale ovale de la douille s'installant lorsque les segments dé début et de fin des ébauches (1) qui dans le moule de soufflage (5) sont élargis en une terminaison supérieure de fût et en un fond inférieur de fût sont extrudés,
- par des déplacements de réglage supplémentaires commandés par programme de l'élément additionnel (10), le profil de la masse fondue des ébauches (1) étant corrigé dans les segments de début et de fin, pour compenser des différences d'épaisseur dans la direction périphérique dans la zone supérieure et dans la zone du fond inférieur des fûts (6) soufflés sur matrice, de sorte que la terminaison supérieure des fûts (6) élargis dans le moule de soufflage (5) et la zone de transition des fûts (6) entre le fond inférieur du fût et l'enveloppe du fût ne comportent dans la direction périphérique aucun écart d'épaisseur par rapport à des valeurs prescrites.

2. Procédé selon la revendication 1, **caractérisé en ce qu'**en tant qu'élément additionnel (10), on utilise une deuxième douille (13) élastiquement déformée, qui délimite l'écartement de filière du côté périphérique et pendant l'extrusion des segments de début et de fin des ébauches (1) est déformée par actionnement d'au moins un servomoteur agissant sur la douille.

3. Procédé selon la revendication 1, **caractérisé en ce qu'**en tant qu'élément additionnel (10), on utilise des coulisseaux (15) réglables à l'horizontale ou à la verticale, dont les déplacements de réglage modifient partiellement la largeur d'écartement de l'écartement de filière dans la direction périphérique.

4. Procédé selon l'une quelconque des revendications 1 à 3, **caractérisé en ce qu'**on place sensiblement sur la même hauteur, sur des segments opposés de l'épine (2) et de la bague de filière (3) la douille (9) déformable et l'élément additionnel (10) commandé par programme.

5. Procédé selon l'une quelconque des revendications 1 à 4, **caractérisé en ce qu'**on place l'un derrière l'autre dans la direction d'écoulement de la masse fondue la douille (9) déformable et l'élément additionnel (10) commandé par programme.

6. Procédé selon l'une quelconque des revendications 1 à 5, **caractérisé en ce que** les déplacements de réglage de l'élément additionnel (10) sont commandés par un programme qui s'exécute simultanément à un programme d'épaisseur de paroi, lequel commande les déplacements de réglage de l'épine (2) et/ou de la bague de filière (3), ainsi que les servomoteurs (11) agissant sur la douille (9) élastique.

7. Procédé selon l'une quelconque des revendications 1 à 5, **caractérisé en ce que** les déplacements de réglage de l'élément additionnel (10) sont commandés par un programme, en fonction du temps, en fonction de la course ou en fonction de la longueur des tubes des ébauches (1) sortant de l'écartement de filière.
